# EUROPEAN PATENT SPECIFICATION

(11) **EP 4 030 069 B1**
(45) Date of publication and mention of the grant of the patent: **09.08.2023**
(21) Application number: 22150872.4
(22) Date of filing: 11.01.2022
(51) Int. Cl.: F16B 5/00, F16B 2/18, F16B 5/10, F16B 21/04

(54) **A QUICK-COUPLING UNIT**
SCHNELLKUPPLUNGSEINHEIT
UNITÉ DE RACCORD RAPIDE

(30) Priority: 15.01.2021 IT 202100000671
(43) Date of publication of application: 20.07.2022
(73) Proprietor: Tiber Pack S.p.A., 52037 Sansepolcro (AR) (IT)
(72) Inventor: CECI, MAURIZIO, 52037 SANSEPOLCRO (AR) (IT)
(74) Representative: Dall'Olio, Christian

(56) References cited:
- US-A1- 2018 051 735
- US-B1- 9 926 955

## Description

### DESCRIPTION OF THE INVENTION

The present invention relates to the technical sector relating to automatic or semi-automatic machines, for the movement of articles, which for example are grouped in units or bundles, and to the packaging thereof in cardboard boxes which are formed starting from flat die-cut blanks.

In particular, the invention concerns a quick-coupling unit for coupling a first component, for example configured to be mounted on a movement member of an automatic or semi-automatic machine or on a fixed frame of the automatic or semi-automatic machine, with a second component, which is configured to be coupled with one or more abutment elements of the articles, so that, when the second component is coupled to the first component, the abutment element or abutment elements can abut an article or a group of articles and carry out transfer thereof, for example into of a pre-formed U-shaped cardboard packaging, or can constitute an abutment for an article or a group of articles in movement.

Usually the abutment elements of the articles are made to a size, in accordance with the shape of the articles, or of the dimensions of the bundle of articles, arranged in flanked rows, which are to be moved.

In the automatic or semi-automatic machines presently available, the abutment elements such as for example a plate or a strap, or a comb pusher, or an abutment wall) are borne by a relative support which must, time by time, according to the size of the articles or of the bundle of articles, to be mounted on a corresponding support member mounted on an automatic or semi-automatic machine, such as a movement member (for example a movable head or a translator member) or on a part of the fixed frame of the automatic or semi-automatic machine.

For these coupling operations, at present the classic mechanical locking and coupling means are used, such as for example screws or threaded bolts, lock-nuts, adjustable handles, knobs, or the like.

The coupling operations therefore require an manual intervention on the part of operators who have to use spanners or other tightening tools to carry out the tightening of the screws and bolts, or for tightening/loosening the adjustable handles, knobs, etc.

At the same time, the abutment elements must also support the abutment elements, in the correct coupling position thereof, while they carry out the insertion and locking operations of the screws and bolts, which can also require a not-insignificant effort.

It is clear that these operations are not easy and require a certain degree of effort, as well as a significant amount of time and, at times, they can be problematic as the operators have to handle tightening tools (such as for example spanners, as mentioned) in manoeuvring spaces that can be small because of the presence of cables or other components of the automatic or semi-automatic machine. A quick-coupling unit of the prior art is shown in US9926955 B1.

The aim of the present invention is therefore to describe a quick-coupling unit of a first component, mountable on a movement member or on a part of the fixed frame of an automatic or semi-automatic machine, with a second component, configured to support at least an abutment element of articles, able to obviate the drawbacks present in the prior art and described in the foregoing.

In particular, an aim of the present invention is to provide a quick-coupling unit which enables, rapidly and effectively, realising the coupling and blocking force between the first component and the second component without requiring the use of external mechanical coupling means, nor the use of tightening tools.

The above-mentioned advantages are obtained with a quick-coupling unit according to the contents of the claims.

The characteristics of a preferred but not exclusive embodiment of the quick-coupling unit of the present invention are described in the following with reference to the appended tables of drawings, in which:
- figure 1A is a schematic perspective view, of the quick-coupling unit of the invention with the first component and the second component separated and decoupled from one another;
- figure 1B is a schematic perspective view of the quick-coupling unit with the first component and the second component coupled and blocked to one another by means of the quick-coupling system;
- figure 1C illustrates, in a schematic perspective view from another angle, the quick-coupling unit of the first component and the second component separated and decoupled from one another;
- figure 1D illustrates, according to an exploded perspective view, some characteristic elements of the first component and of the second component of the quick-coupling unit of the invention;
- figures 2A and 2B illustrate, in relative schematic perspective views, the quick-coupling unit of the invention in a first possible but not exclusive application, with an abutment element of articles in the form of a strap, wherein, in figure 2A, the first component and the second component are separated and decoupled from one another, while in figure 2B they are coupled and blocked to one another by means of the quick-coupling system;
- figure 2C illustrates, in a very schematic perspective view and in a perspective view, the use of the quick-coupling unit of figures 2A and 2B in a movable operating head for the movement of articles or groups of articles, for example for the positioning of a group of articles in a cardboard packaging, preformed in a U-shape (not illustrated);
- figures 3A, and 3B instead illustrate the quick-coupling unit in a possible further application thereof with the first component mounted on a translator member and the second component arranged to bear abutment elements of articles that are comb-shaped or are pusher blocks, wherein in figure 3A the first component and the second component are separated and decoupled from one another while in figure 3B the first component and the second component are coupled and blocked to one another by means of the quick-coupling system;
- figure 4A illustrates a frontal view of the first component of the quick-coupling unit of the invention in a first position of the quick-coupling system;
- figure 4B is a plan view from above of figure 4A;
- figure 4C is a plan view from below of figure 4A;
- figure 5 illustrates, in a frontal view, some significant elements of the quick-coupling system of the quick-coupling unit of the invention;
- figures 6, 7 and 8 illustrate the elements of figure 5 according to respective perspective views made from different angles, wherein in figure 8 one of the elements has been omitted better to evidence others;
- figure 9 is a plan view from above of figure 8;
- figure 10 is a view along section plane II-II of figure 9;
- figure 11 shows a larger-scale detail, in a slightly perspective view of figure 10;
- figure 12A illustrates, in an exploded perspective view, some characteristic elements of the quick-coupling system of the quick-coupling unit of the invention;
- figures 12B and 12C illustrate, according to respective perspective views made from different angles, a particularly significant element of the quick-coupling system of the quick-coupling unit of the invention;
- figure 13A illustrates, in a frontal view, the quick-coupling unit of the invention with the first component and the second component coupled and blocked to one another by means of the quick-coupling system;
- figure 13B is a plan view from above of figure 13A;
- figure 13C illustrates the view of figure 13A with some parts removed;
- figure 14A illustrates figure 13C also with some parts removed;
- figures 14B and 14C illustrate figure 14A in respective perspective views taken from different angles;
- figure 15 is the view along section plane I-I of figure 4B;
- figure 16 is a view along section plane I I I-I I I I of figure 13B.

With reference to the appended tables of drawings, reference numeral (100) denotes the quick-coupling unit of the invention, in its entirety.

The quick-coupling unit (100) comprises a first component (1) and a second component (2).

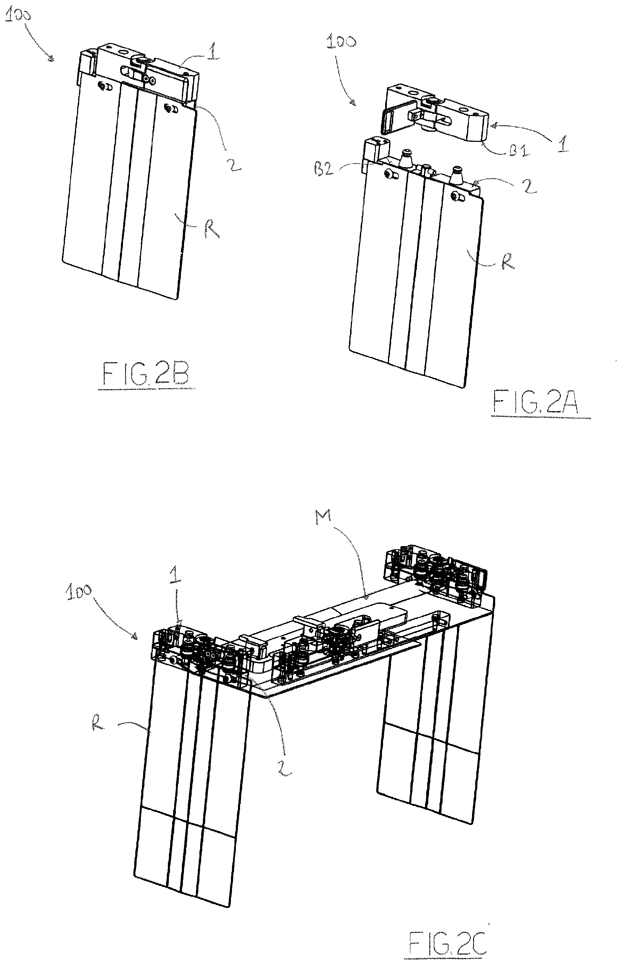

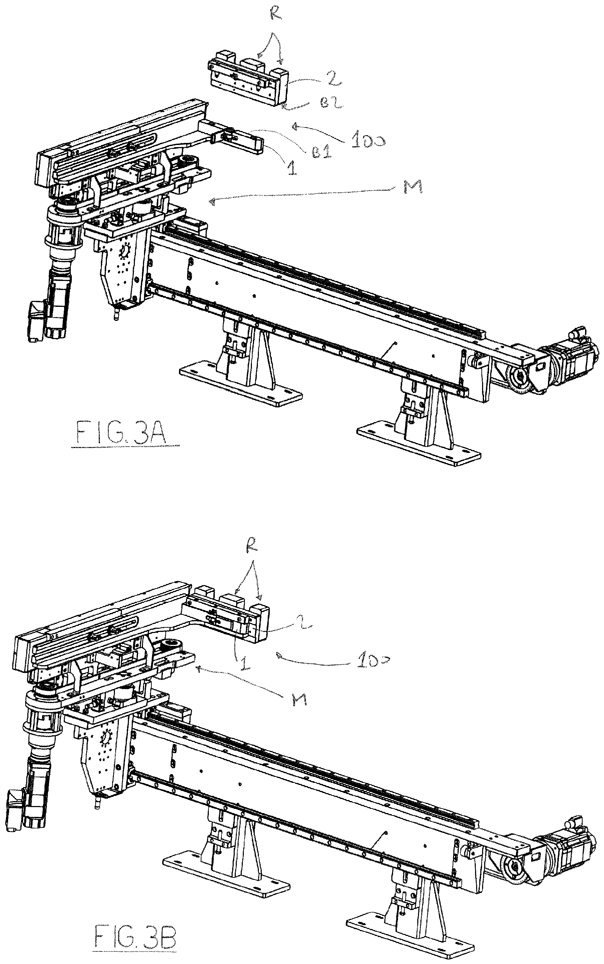

The first component (1) is made in such a way as to comprise a first abutment surface (B1) and to be mountable on a part of an automatic or semi-automatic machine, such as a movement member (M) (for example a movable head, see figure 2C, or a translator member (see figure 3B), or on a fixed frame.

The second component (2) is made in such a way as to comprise a second abutment surface (B2) and is configured for coupling with (or for supporting) at least an abutment element (R) (such as for example a plate-shaped element of a flap, or a strap, see for example figure 2A, or abutting elements arranged in comb-fashion, or in the form of blocks, see for example figure 3A, or even other forms of abutment elements such as for example abutment walls against which articles or groups of articles are to be pushed or positioned) the abutment element being conformed to abut an article or a series of articles, for example grouped in a bundle.

According to the size of the articles or group of articles which the automatic or semi-automatic machine is to process, there is the need to use a second component arranged with an abutment element having a shape and dimensions that are adequate for the size of the articles or group of articles.

The second component (2) is thus destined to be coupled to the first component (1), which can be mounted, for example, on a movement member (M) of the automatic or semi-automatic machine, in such a way that, when the movement member (M) is activated, the second component (2) can be moved in a movement direction and the abutment element (R) can abut an article or a series of articles so as to move them along the movement direction.

The first component (1) can also be mounted on a fixed frame of the machine and the second component (2) coupled to the first component (1) so that the abutment element (R) arranged thereon can constitute an abutment for the positioning of an article or a group of articles in movement.

The quick-coupling unit (100) proposed by the invention is realised and configured in such a way as to comprise a quick-coupling system (S) for rapid hooking of the second component (2) to the first component (1).

The quick-coupling system (S) comprises: a positioning device (3), which is arranged on the second component (2), and a locking and blocking device (4), arranged on the first component (1).

The positioning device (3) is configured to enable positioning the second component (2) neared to the first component (1) with the second abutment surface (B2) opposite the first abutment surface (B1) and the locking and blocking device (4) is configured so as to receive the positioning device (3) and activatable to lock and block the positioning device (3) so as to block the second component (2) to the first element (1) with the second abutment surface (B2) abutting and forced against the first abutment surface (B1).

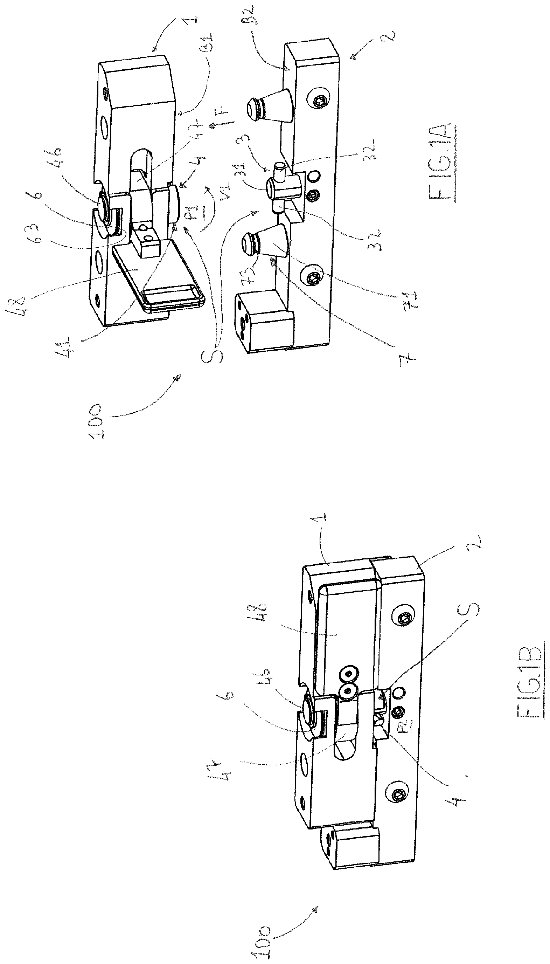

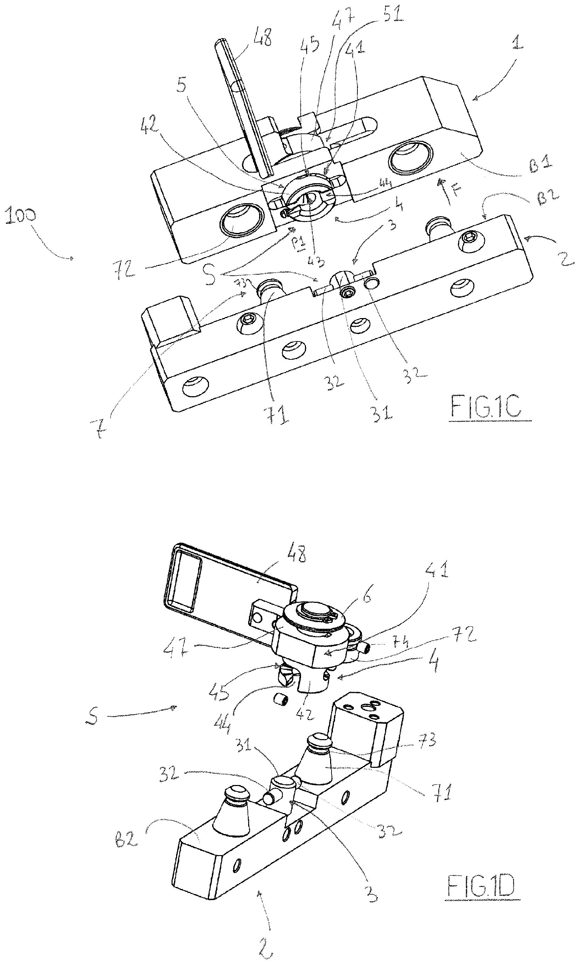

In detail, as illustrated in the figures, the positioning device (3) of the second component (2) comprises an insertion member (31), which is arranged projecting from the second abutment surface (B2), and two coupling elements (32) which are coupled to the insertion member (31) so as to project transversally and bilaterally from the insertion member (31) (see for example in particular figure 1A, figure 1D).

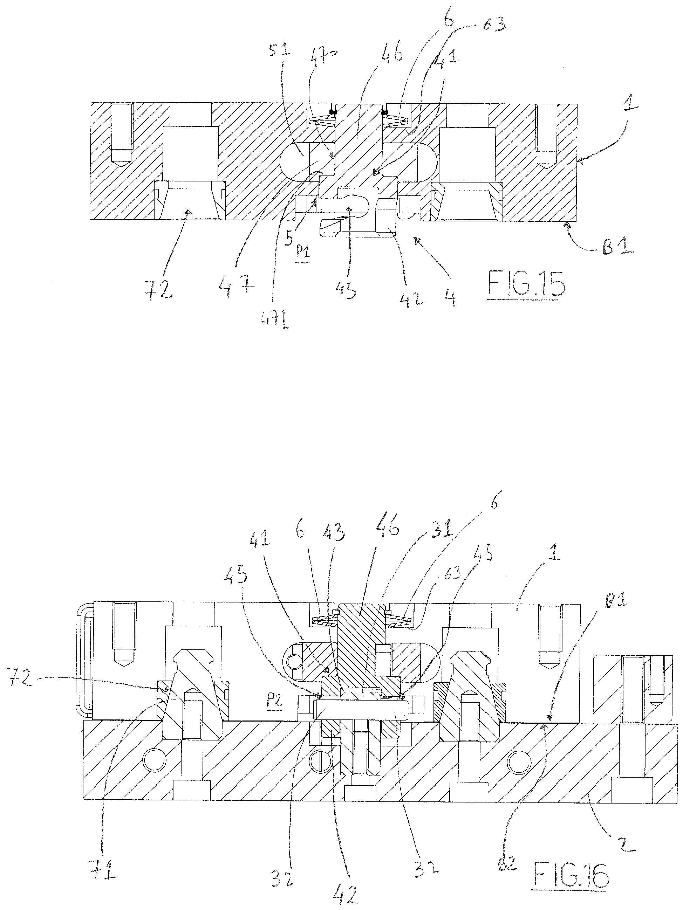

For example, the two coupling elements can be constituted by the two head ends of a pin coupled transversally to the insertion member (see for example figure 16), or be constituted by two separate elements. The positioning member (31) can have a cylindrical shape.

The locking and blocking device (4) of the first component (1) comprises a locking and blocking element (41) which is arranged in a seat (5) realised in the first component (1) and facing the first abutment surface (B1) (see for example in particular figure 1C, figure 4C, figure 15).

The locking and blocking element (41) is arranged in the seat (5) in such a way as to be rotatable in rotation in the seat (5) according to an axis of rotation perpendicular to the first abutment surface (B1).

The locking and blocking element (41) is made in such a way as to comprise a head portion (42) (for example, preferably but not exclusively, having a cylindrical shape) conformed in such a way as to comprise an axial housing (43), a transversal housing (44), to make the axial housing (43) accessible from outside, and, bilaterally to the transversal housing (44) and communicating with the transversal housing (44), the two annular recesses (45) (see for example figure 1C, figure 4C, figure 7).

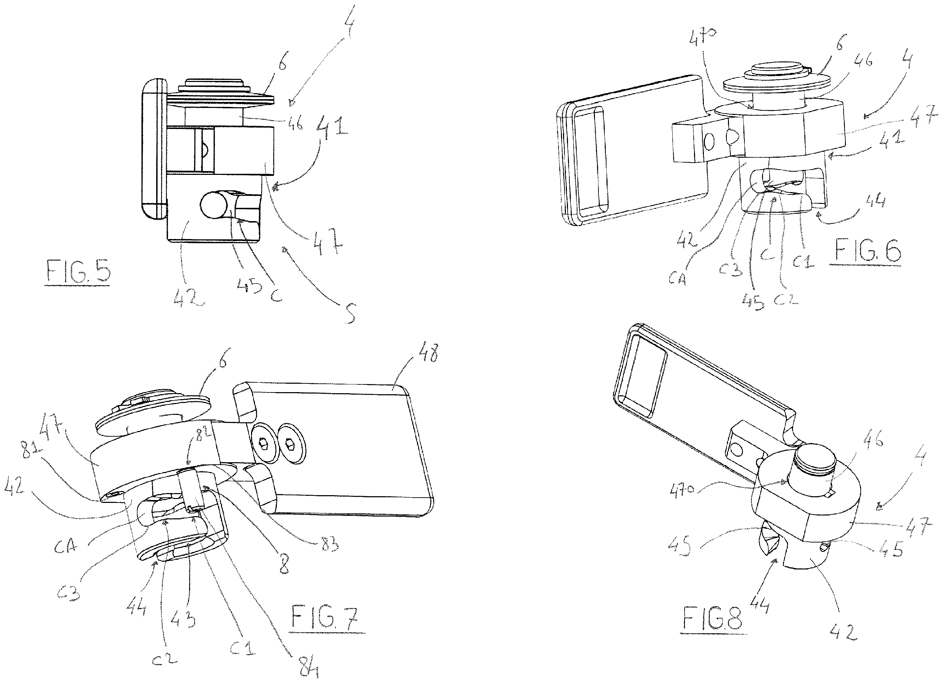

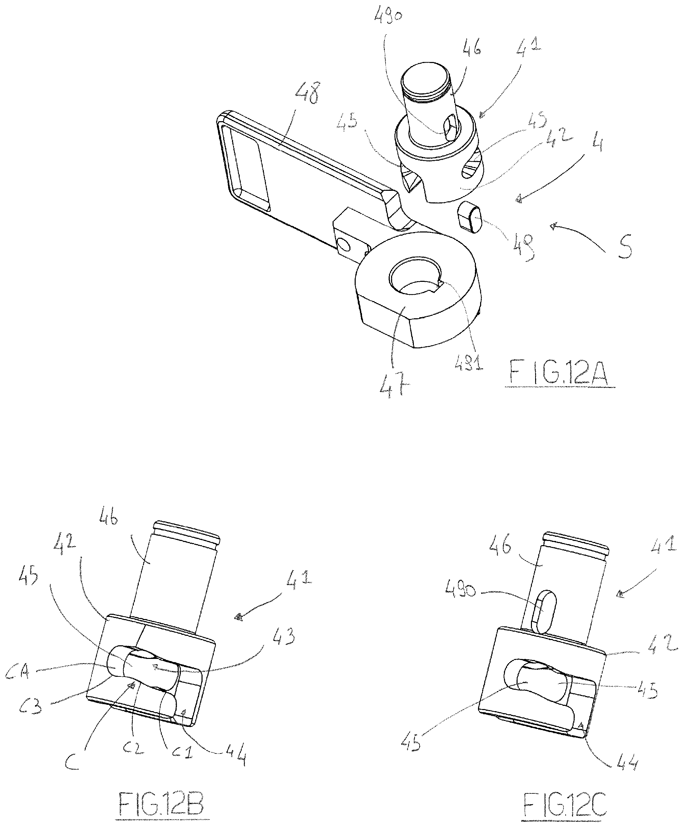

According to the invention, each of the two annular recesses (45) is made in such a way as to comprise at least a profiled sliding surface (C) which has a profiled shape so that, starting from an inlet portion of the annular recesses (45) communicating with the transversal housing (44):
a first stretch (C1) of the sliding surface (C) is substantially parallel to the transversal housing (44) and to the first abutment surface (B1),
a second stretch (C2) of the sliding surface (C), consecutive to the first stretch (C1), is inclined towards the inside of the axial housing (43), moving away from the first abutment surface (B1) (constituting a sort of ramp),
and a third stretch (C3) of the sliding surface (C), consecutive to the second stretch (C2), is conformed in such a way as to define a cavity (CA) which is located, with respect to the first abutment surface (B1), at a greater distance than the first stretch (C1) of the sliding surface (C) (see for example figures 5, 6, 7, 12A and 12B).

The axial housing (43) is dimensioned in such a way as to be able to receive internally thereof the insertion member (31) of the positioning device (3), while the transversal housing (44) is dimensioned in such a way as to be able to receive internally thereof the two coupling elements (32) of the positioning device (3) by positioning them at the inlet portion of the two annular recesses (45).

In turn, the two annular recesses (45) are specially dimensioned so as to be able to respectively accommodate the two coupling elements (32) internally thereof by reciprocal sliding between the sliding surface (C) with a profiled shape and the two coupling elements (32).

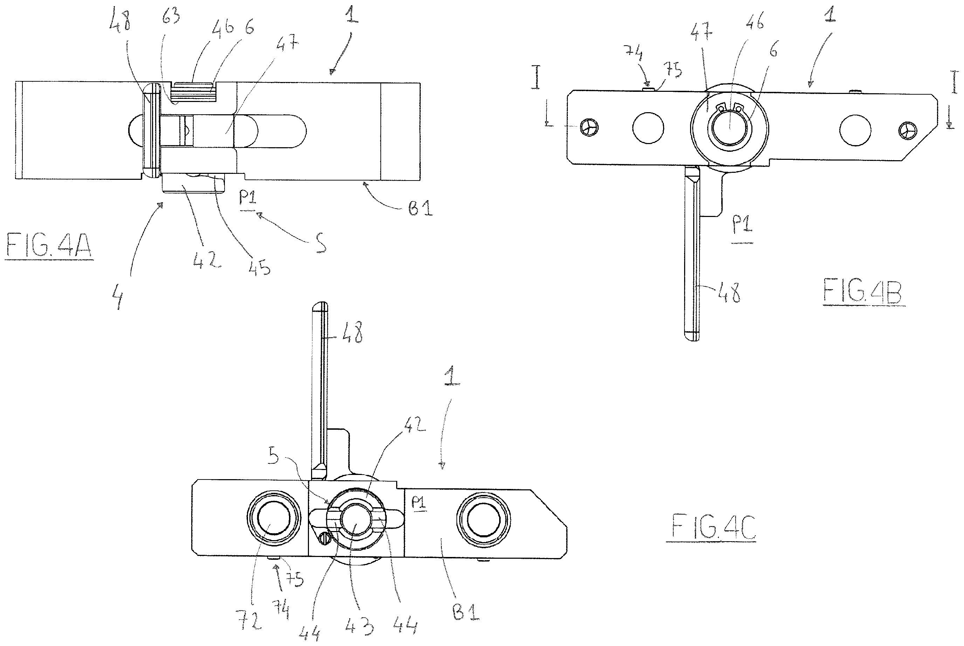

The locking and blocking element (41) is rotatable in the seat (5) in such a way as to be positionable in a first coupling position (P1) (see in particular figure 1A, figure 1C and figure 4C) wherein the transversal housing (44) is arranged in a first direction with respect to the first abutment surface (B1) so as to enable, when the second element (2) is neared to the first element (1), (see the arrows (F) di figure 1A and figure 1C) positioning the second abutment surface (B2) facing and opposite the first abutment surface (B1), the insertion of the positioning member (31) in the axial housing (43) and the insertion of the two coupling elements (32) in the transversal housing (44) so as to be facing the inlet portion of the two annular recesses (45).

Once the second component (2) and the first component (1) are arranged in this reciprocal position and configuration, the locking and blocking element (41) can thus be rotated in the seat (5) with respect to the positioning member (31) and to the two coupling elements (32) about the axis of rotation in a first rotation direction (V1) up to a second blocking position (P2) (see for example figures 1B, 13A, 13C, 16), wherein the transversal housing (44) is arranged in a second direction with respect to the first abutment surface (B1), which is transversal, for example perpendicular, to the above-mentioned first direction.

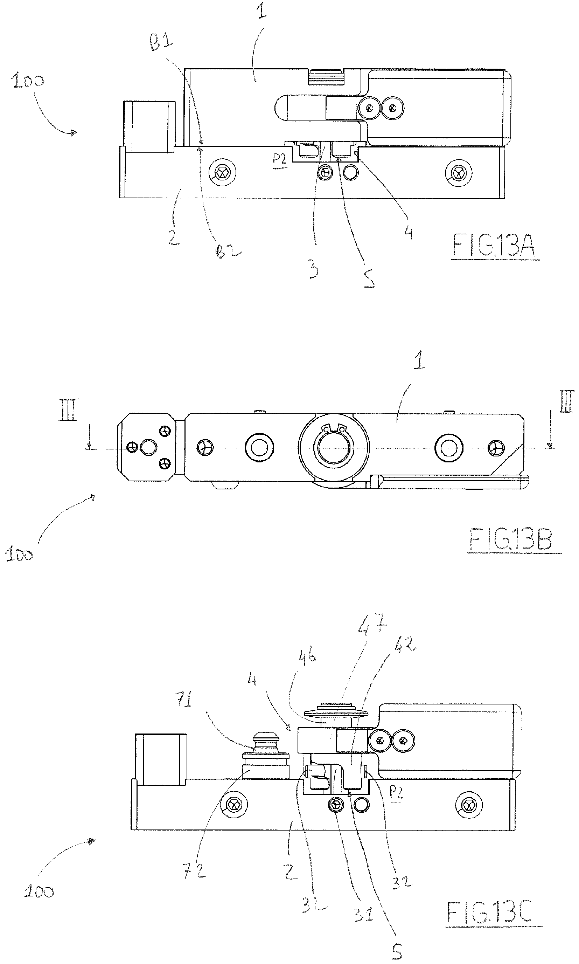

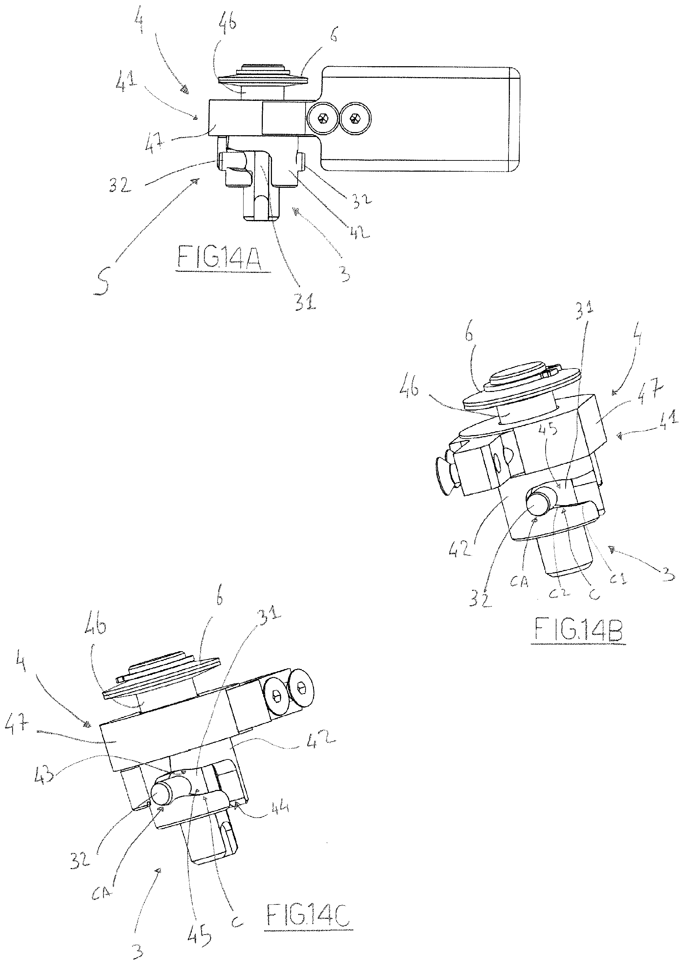

In this way, with this rotation, the two annular recesses (45) are rotated with respect to the two coupling elements (32), and thus internally house the two coupling elements (32), causing the sliding surface (C) to slide, by means of the profiled shape, against the two coupling elements (32) up to when the two coupling elements (32) are housed in the cavity (CA) of the third stretch (C3) of the sliding surface (C) blocking the second component (2) to the first component (1) (see for example figures 13C, 14A, 14B, 14C).

Specifically, during the rotation of the locking and blocking element (41), with the sliding of the second inclined stretch (C2) of the sliding surface (C) (which, as mentioned, is shaped as a sort of ramp) a locking force is generated against the two coupling elements (32) between the second abutment surface (B2) of the second component (2) and the first abutment surface (B1) of the first component (1), with which locking force the second component (2) is pulled against the first component (1) and the second abutment surface (B2) is maintained abutting and against the first abutment surface (B1).

In other words, when, with the rotation of the locking and blocking element (41), the second inclined stretch (C2) of the sliding surface (C) of each of the two annular recesses (45) slides with respect to the two coupling elements (32), the ramp-shaped inclination of the second inclined stretch (C2) of the sliding surface (C) forces the second component (2) to move towards the first component (1), performing a sort of pulling action of the second component (2) against the first component (1), thus forcing the second abutment surface (B2) of the second component (2) against the first abutment surface (B1) of the first component, carrying out a locking action between the two components.

Further, on completion of the rotation of the locking and blocking element (41), the two coupling elements (32) will have gone beyond the second inclined stretch (C2) of the sliding surface (C) and will be accommodated in the cavities (CA) of the third stretch (C3) of the sliding surface (C) of the two annular recesses (45), identifying a blocking position, (i.e. a position which maintains the locking between the two components (1, 2) (see for example figures 14B, 14C, 16).

In this way, owing to the particular combination of characteristics described in the foregoing, in particular to the conformation and configuration of the elements constituting the quick-coupling system, with the quick-coupling unit of the invention it is possible to couple and block the second component with the first component, and thus rapidly and quickly mount the second component which bears at least an abutment element of articles on the movement member (M) (such as a movable head, or a translator member), without requiring recourse to the use of mechanical coupling elements, such as screws, bolts, nuts and the like, nor having need of mechanical locking tools.

The special conformation and inclination with which the second stretch of the sliding surface of the two annular recesses is realised, and the position of the cavity of the third stretch with respect to the first stretch, will be able to determine the locking and blocking force between the second component and the first component.

The locking and blocking force between the second component (2) and the first component (1) is given by the pressure that is created between the second abutment surface (B2) of the second component (2) and the first abutment surface (B1) of the first component (1), when the second abutment surface (B2) is pushed against the first abutment surface (B1) during the sliding of the second inclined stretch (C2) of the sliding surface (C) with respect to the two coupling elements (32).

The insertion and positioning of the two coupling elements (32) in the cavities (CA) of the third stretch (C3) of the sliding surface (C), once the second inclined stretch (C2) has been exceeded, will then guarantee the maintaining of a holding force for the locking and blocking between the two components.

The profile of the annular recesses (45), in particular of the second inclined stretch (C2) of the sliding surface (C), is made in such a way as to enable the two coupling pins (32), during the rotation of the locking and blocking element (41) from the first coupling position (P1) to the second blocking position (P2), to pass beyond the second inclined stretch (C2) and to reach and be positioned in the cavities (CA) of the third stretch (C3), in any case guaranteeing, in the last above configuration, the exerting of a pushing and retaining force of the second component (2) against the first component (1).

For this purpose, one or both of the abutment surfaces (B1, B2), as well as the coupling elements (32) or the profile of the sliding surface (C), can be made of a yielding or elastically deformable material, such as for example an elastomeric or rubber material.

Usually, the abutment surfaces, as well as the coupling elements or the profile of the sliding surface, are made of rigid materials, such as for example metal, and therefore neither yielding nor deformable.

In this regard, in a preferred aspect, the locking and blocking device (4) is configured in such a way that the locking and blocking element (41) is arranged in the seat (5) with freedom to translate axially and in such a way as to comprise special preloading elastic means (6), as will be specified in the following, in such a way as to enable the locking and blocking element (41), during the rotation thereof from the first coupling position (P1) to the second blocking position (P2), to be able to axially translate in a nearing direction towards the second component (2) during the sliding of the second inclined stretch (C2) of the sliding surface (C) with respect to the two coupling elements (32), and to be recalled towards the first component (1) once the coupling elements (32) are inserted in the cavities (CA), also performing a locking and blocking function of the coupling elements (32) in the cavities (CA).

In particular, the preloading elastic means (6) are predisposed and configured in such a way as to exert, on the (41), an elastic force such as to maintain the locking and blocking element (41) in a first internal position with respect to the first abutment surface (B1) of the first component (1).

The elastic means (6) are also configured to enable the locking and blocking element (41) to be able to translate axially with respect to the seat (5), during the rotation thereof in the seat (5) from the first coupling position (P1) to the second blocking position (P2), towards a second external position with respect to the first abutment surface (B1) during the sliding of the second inclined stretch (C2) of the sliding surface (C) against the two coupling elements (32), facilitating the passing beyond the second inclined stretch (C2) and the positioning of the two coupling elements (32) in the cavity (CA) of the third stretch (C3) of the sliding surface (C).

In this way the elastic means (6), when the coupling elements (32) are positioned in the cavity (CA), which are arranged to exert, with the elastic force thereof, a recall force of the locking and blocking element (41) towards the first internal position locking the cavities (CA) of the third stretch (C3) of the sliding surface (C) against the coupling elements (32), and thus the second component (2) to the first component (1).

The presence of the elastic means (6) is further advantageous for guaranteeing in any case an optimal pressure and holding force between the two abutment surfaces even in a case where the two abutment surfaces are not perfectly planar, as well as over time when, owing to use, the parts destined to slide reciprocally to one another, such as the profile of the sliding surface and the two coupling elements, can be subject to a process of wear.

For the unblocking and decoupling of the second component (2) from the first component (1), it will be sufficient to rotate the locking and blocking element (41) in reverse direction, exerting a light force that is such as to cause the two coupling elements (32) to exit from the two cavities (CA) of the third stretch (C3) of the sliding surface (C), overcoming the elastic recall force of the elastic means (6), up to returning it into the initial position (P1) (first coupling position), and then, moving the second component away from the first component, to extract and decouple the positioning member (31) of the axial housing (43) and the two coupling elements (32) of the transversal housing (44).

Further and other characteristics of the preferred and advantageous, but not exclusive, embodiment of the quick-coupling unit of the invention are described in the following.

The locking and blocking device (4) comprises a rotation element (47), coupled to an activating lever (48), which is internally hollow to define an internal housing (470) and which is rotatably inserted in a rotation seat (51), made in the first component (1) (see for example figures 5, 6, 7, 8 and 15).

The locking and blocking element (41) is conformed in such a way as also to comprise a shaft-shaped portion (46) in a single body with the head portion (42), the locking and blocking element (41) being arranged in such a way that the shaft-shaped portion (46) is positioned, by means of an antirotational coupling, in the internal housing (470) of the rotation element (47), so that when the rotation element (47), by means of the activating lever (48), is activated in rotation with respect to the rotation seat (51), the shaft-shaped portion (46), and therefore the head portion (42) of the locking and blocking element (41), is activated in rotation.

Therefore, by gripping the activating lever (48) it is possible to rotate, for example by 90 degrees, the locking and blocking element (41) from the first coupling position (P1) (figures 1A, 1C) to the second blocking position (P2) (figures 1B, 13A), for the locking and blocking of the second component (2) to the first component (1), and vice versa from the second blocking position (P2) from the first coupling position (P1), so as to enable the decoupling of the second component (2) from the first component (1).

The shaft-shaped portion (46) of the locking and blocking element (41) is coupled in the internal housing (470) of the rotation element (47), with freedom to translate axially, with the preloading elastic means (6) (which can for example be Belleville springs) interposed, and therefore acting, between the shaft-shaped portion (46) of the locking and blocking element (41) and an abutment surface (63) of the first component (1) so as to maintain the head portion (42) of the locking and blocking element (41) in the first internal position in the seat (5) in abutment against an abutment wall (471) of the rotation element (47) (see for example figures 5, 6, 7, 15 and 16).

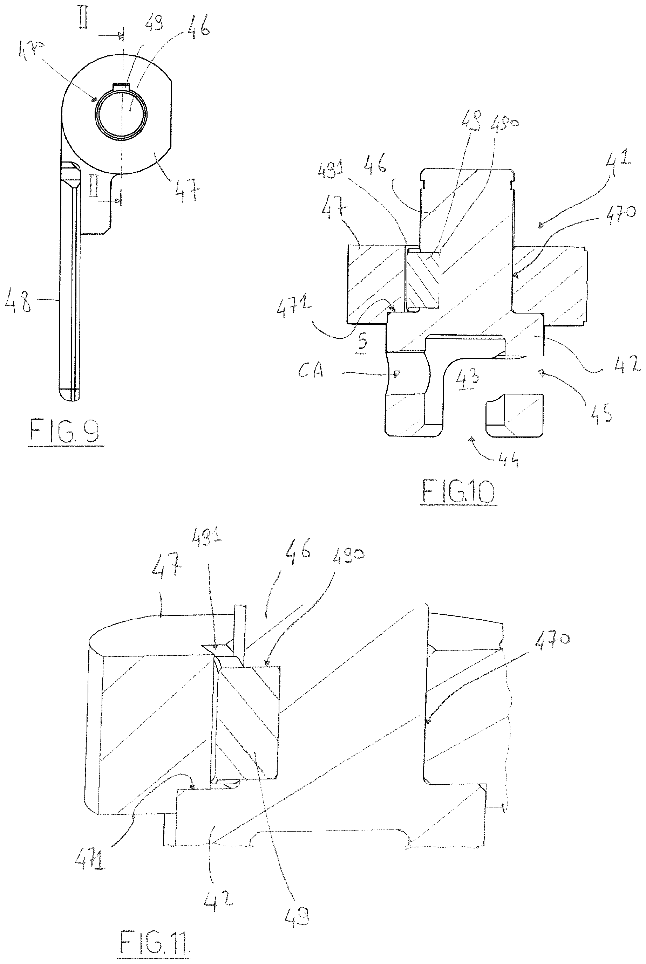

The shaft-shaped portion (46) is inserted and coupled in the internal housing (470) of the rotation element (47) with freedom to translate axially by means of a key coupling (49), wherein a key (49) is interposed between a slot (490) realised axially along a part of the shaft-shaped portion (46) and a hollow (491) realised in an opposite part of the wall of the internal housing (470) (see for example in particular figures 9, 10, 11 and 12A).

The locking and blocking device (4) comprises rotation limiting means (8) of the angular rotation of the rotation element (47), and therefore of the locking and blocking element (41), so as to identify two end positions for the angular rotation of the rotation element (47), and therefore of the locking and blocking element (41), corresponding to the first coupling position (P1) and to the second blocking position (P2) (see for example figure 7).

The limiting means (8) of the angular rotation, according to the illustrated preferred embodiment, can comprise a pair of hemispherical seats (81, 82) angularly arranged on a lower wall of the rotation element (47) and a sphere (83) borne by a pin (84) inserted in a relative niche of the first element (1) facing the rotation seat (51).

The sphere (83) is mounted on the pin (84) by the interposing of a spring (not illustrated in detail) so that, when the rotation element (47) is activated in rotation and one of the two hemispherical seats (81, 82) is brought to the position of the pin (84), the sphere (83) is pushed by the spring into a hemispherical seat (81, 82) realising an end-run position for the rotation of the rotation element (47), and therefore of the locking and blocking element (41).

In a further preferred an advantageous aspect, the quick-coupling unit (100) of the invention can comprise centring means (7) configured to enable the centring, and therefore the correct insertion, of the insertion member (31) and of the two coupling elements (32) of the coupling device (3) respectively with the axial housing (43) and the transversal housing (44) present in the locking and blocking element (41) when the second component (2) is neared to the first component (1) and the second abutment surface (B2) arranged facing the first abutment surface (B1).

The centring means (7) preferably comprise at least a conical element (71) arranged perpendicularly on and projecting from the second abutment surface (B2) of the second component (2) and at least a corresponding conical seat (72) which is made in the first component (1) and communicating with the first abutment surface (B1),.

The conical seat (72) has complementary dimensions and shape to the conical element (71).

In the figures of the drawings, the centring means (7) comprise a pair of conical elements (71) arranged bilaterally to the coupling device (3) and a relative complementary pair of conical seats (72) arranged bilaterally to the locking and blocking element (41).

The centring means (7) can be made in such a way as to comprise also a single conical element and a relative conical seat and also comprise a pair of abutment elements which are arranged, respectively, on the first component and on the second component in such a way as to go into abutment with one another when the conical element inserts in the conical seat, in order to determine the centring and correct coupling positioning of the second component with the first component.

In a further advantageous aspect, the conical element (71) is made in such a way as to have an annular gully (73) and the centring means (7) comprise a blocking pin (74) which is predisposed, arranged, with the interposition of an elastic element (not illustrated in detail in the figures of the drawings), in a corresponding transversal seat (75) made in the first component (1) and communicating with the conical seat (72) (see for example figures 1C and 1D).

In this way, when the conical element (71) is inserted and introduced into the conical seat (72) the blocking pin (74) can insert in the annular groove (73) and block the conical element (71) in the conical seat (72), and thus maintain the second element (2) neared to the first component (1), with the second abutment surface (B2) facing the first abutment surface (B1).

This is particularly advantageous when the second component (2) bears the abutment elements (R) of articles such as straps or plate-shaped elements, which are to be mounted vertically on a movable head, as for example illustrated in figure 2C, since the operator will not have to support the weight once he/she has brought the second component (2) near to the first component (1), and the conical element (71) is inserted and introduced into the conical seat (72), because the blocking pin (74), pushed by the spring, inserts in the annular groove (73).

## Claims

1. A quick-coupling unit (100) comprising:
a first component (1) comprising a first abutment surface (B1);
a second component (2) comprising a second abutment surface (B2) and configured for coupling with at least an abutment element (R) conformed to abut an article or a series of articles;
a quick-coupling system (S) for rapid hooking of the second component (2) to the first component (1), wherein the quick-coupling system (S) comprises:
a positioning device (3), arranged on the second component (2);
a locking and blocking device (4), arranged on the first component (1);
the positioning device (3) being configured to enable positioning the second component (2) neared to the first component (1) with the second abutment surface (B2) opposite the first abutment surface (B1) and the locking and blocking device (4) being configured so as to receive the positioning device (3) and activatable to lock and block the positioning device (3) so as to block the second component (2) to the first element (1) with the second abutment surface (B2) abutting and forced against the first abutment surface (B1);
wherein the positioning device (3) comprises an insertion member (31) arranged projecting from the second abutment surface (B2) and two coupling elements (32) projecting transversally and bilaterally from the insertion member (31);
wherein the locking and blocking device (4) comprises a locking and blocking element (41) arranged in a seat (5) realised in the first component (1) and facing the first abutment surface (B1), the locking and blocking element (41) being arranged in the seat (5) in such a way as to be rotatable in rotation in the seat (5) according to an axis of rotation perpendicular to the first abutment surface (B1), the locking and blocking element (41) comprising a head portion (42) conformed so as to comprise an axial housing (43), a transversal housing (44), to make the axial housing (43) accessible from outside, and, bilaterally to the transversal housing (44) and communicating with the transversal housing (44), two annular recesses (45) each of which comprising at least a profiled sliding surface (C) which has a profiled shape so that, starting from an inlet portion of the annular recesses (45) communicating with the transversal housing (44), a first stretch (C1) of the sliding surface (C) is substantially parallel to the transversal housing (44) and to the first abutment surface (B1), a second stretch (C2) of the sliding surface (C), consecutive to the first stretch (C1), is inclined towards the inside of the axial housing (43), moving away from the first abutment surface (B1), and a third stretch (C3) of the sliding surface (C), consecutive to the second stretch (C2) is conformed in such a way to define a cavity (CA) which is located, with respect to the first abutment surface (B1), at a greater distance than the first stretch (C1) of the sliding surface (C);
wherein the axial housing (43) is dimensioned in such a way as to be able to receive internally thereof the insertion member (31) of the positioning device (3), the transversal housing (44) is dimensioned in such a way as to be able to receive internally thereof the two coupling elements (32) of the positioning device (3) by positioning them at the inlet portion of the two annular recesses (45), the two annular recesses (45) being dimensioned in such a way as to be able to respectively accommodate the two coupling elements (32) by reciprocal sliding between the sliding surface (C) with a profiled shape and the two coupling elements (32);
wherein the locking and blocking element (41) is rotatable in the seat (5) in such a way as to be positionable in a first coupling position (P1), wherein the transversal housing (44) is arranged in a first direction with respect to the first abutment surface (B1) so as to enable, when the second element (2) is neared to the first element (1), positioning the second abutment surface (B2) facing and opposite the first abutment surface (B1), the positioning member (31) to be inserted in the axial housing (43) and the two coupling elements (32) to insert in the transversal housing (44) and be facing the inlet portion of the two annular recesses (45);
wherein the locking and blocking element (41) is thus rotatable in rotation in the seat (5) with respect to the positioning member (31) and to the two coupling elements (32) about the axis of rotation in a first rotation direction (V1) up to a second blocking position (P2) in such a way that the two annular recesses (45) internally house the two coupling elements (32) causing the sliding surface (C) to slide, by means of the profiled shape, against the two coupling elements (32) up to when the two coupling elements (32) are housed in the cavity (CA) of the third stretch (C3) of the sliding surface (C) blocking the second element (2) to the first element (1), with the sliding of the second inclined stretch (C2) of the sliding surface (C) against the two coupling elements (32) generating a locking force between the second abutment surface (B2) and the first abutment surface (B1) with which locking force the second element (2) is pulled against the first element (1) and the second abutment surface (B2) is maintained abutting and against the first abutment surface (B1).

2. The quick-coupling unit (100) of claim 1, wherein the locking and blocking device (4) is configured in such a way that the locking and blocking element (41) is arranged in the seat (5) so as to be able to translate axially with respect to the seat (5), and wherein the locking and blocking device (4) comprises preloading elastic means (6) which are arranged and configured in such a way as to exert, on the locking and blocking element (41), an elastic force such as to maintain the locking and blocking element (41) in a first internal position with respect to the first abutment surface (B1) of the first component (1), and wherein the elastic means (6) are configured to enable the locking and blocking element (41) to be able to translate axially with respect to the seat (5), during the rotation thereof in the seat (5) from the first coupling position (P1) to the second blocking position (P2), towards a second external position with respect to the first abutment surface (B1) during the sliding of the second inclined stretch (C2) of the sliding surface (C) against the two coupling elements (32) facilitating the passing beyond the second inclined stretch (C2) and the positioning of the two coupling elements (32) in the cavity (CA) of the third stretch (C3) of the sliding surface (C), with the elastic means (6), when the coupling elements (32) are positioned in the cavity (CA), which are arranged to exert, with the elastic force thereof, a recall force of the locking and blocking element (41) towards the first internal position locking the cavities (CA) of the third stretch (C3) of the sliding surface (C) against the coupling elements (32), and thus the second component (2) to the first component (1).

3. The quick-coupling unit (100) of claim 2, wherein the locking and blocking device (4) comprises a rotation element (47), coupled to an activating lever (48), which is internally hollow to define an internal housing (470) and which is rotatably inserted in a rotation seat (51), made in the first component (1), wherein the locking and blocking element (41) is conformed in such a way as also to comprise a shaft-shaped portion (46) in a single body with the head portion (42), the locking and blocking element (41) being arranged in such a way that the shaft-shaped portion (46) is positioned, by means of an antirotational coupling, in the internal housing (470) of the rotation element (47), so that when the rotation element (47), by means of the activating lever (48), is activated in rotation with respect to the rotation seat (51), the shaft-shaped portion (46), and therefore the head portion (42) of the locking and blocking element (41), is activated in rotation, and wherein the shaft-shaped portion (46) of the locking and blocking element (41) is coupled in the internal housing (470) of the rotation element (47) with freedom to translate axially, and wherein the preloading elastic means (6) are arranged so as to act between the shaft-shaped portion (46) of the locking and blocking element (41) and an abutment surface (63) of the first component (1) so as to maintain the head portion (42) of the locking and blocking element (41) in the first internal position in the seat (5) in abutment against an abutment wall (471) of the rotation element (47).

4. The quick-coupling unit (100) of claim 3, wherein the elastic means (6) comprise Belleville springs.

5. The quick-coupling unit (100) of any one of the preceding claims 3 and 4, wherein the shaft-shaped portion (46) is inserted and coupled in the internal housing (470) of the rotation element (47) with freedom to translate axially by means of a key coupling (49), wherein a key (49) is interposed between a slot (490) realised axially along a part of the shaft-shaped portion (46) and a hollow (491) realised in an opposite part of the wall of the internal housing (470).

6. The quick-coupling unit (100) of any one of the preceding claims, wherein the locking and blocking device (4) comprises rotation limiting means (8) of the angular rotation of the rotation element (47), and therefore of the locking and blocking element (41), so as to identify two end positions for the angular rotation of the rotation element (47), and therefore of the locking and blocking element (41), corresponding to the first coupling position (P1) and to the second blocking position (P2), wherein the rotation limiting means (8) of the angular rotation comprise a pair of hemispherical seats (81, 82) angularly arranged on a lower wall of the rotation element (47) and a sphere (83) borne by a pin (84) inserted in a relative niche of the first element (1) facing the rotation seat (51), with the sphere (83) being mounted on the pin (84) by the interposing of a spring so that, when the rotation element (47) is activated in rotation and one of the two hemispherical seats (81, 82) is brought to the position of the pin (84), the sphere (83) is pushed by the spring into a hemispherical seat (81, 82) realising an end-run position for the rotation of the rotation element (47), and therefore of the locking and blocking element (41).

7. The quick-coupling unit (100) of any one of the preceding claims, comprising centring means (7) configured to enable the centring, and therefore the correct insertion, of the insertion member (31) and of the two coupling elements (32) of the positioning device (3) respectively with the axial housing (43) and the transversal housing (44) present in the locking and blocking element (41) when the second component (2) is neared to the first component (1) and the second abutment surface (B2) arranged facing the first abutment surface (B1).

8. The quick-coupling unit (100) of claim 7, wherein the centring means (7) comprise at least a conical element (71) arranged perpendicularly on and projecting from the second abutment surface (B2) of the second component (2) and at least a corresponding conical seat (72) made in the first component (1) and communicating with the first abutment surface (B1), the conical seat (72) having complementary dimensions and shape to the conical element (71).

9. The quick-coupling unit (100) of claim 8, wherein the at least a conical element (71) has an annular groove (73) and wherein the centring means (7) comprise a blocking pin (74) arranged, with interposition of an elastic element, in a corresponding transversal seat (75) made in the first component (1) and communicating with the conical seat (72), so that, when the conical element (71) is inserted and introduced into the conical seat (72) the blocking pin (74) can insert in the annular groove (73) and block the conical element (71) in the conical seat (72), and thus maintain the second element (2) neared to the first component (1), with the second abutment surface (B2) facing the first abutment surface (B1).

## Patentansprüche

1. Schnellkupplungseinheit (100), umfassend:
eine erste Komponente (1), die eine erste Anschlagfläche (B1) umfasst,
eine zweite Komponente (2), die eine zweite Anschlagfläche (B2) umfasst und für die Kopplung mit zumindest einem Anschlagelement (R) ausgelegt ist, das gestaltet ist, um gegen einen Artikel oder eine Reihe von Artikeln anzuliegen;
ein Schnellkupplungssystem (S) zum schnellen Ankoppeln der zweiten Komponente (2) an die erste Komponente (1), wobei das Schnellkupplungssystem (S) umfasst:
eine Positioniervorrichtung (3), die auf der zweiten Komponente (2) angeordnet ist,
eine Spann- und Blockiervorrichtung (4), die auf der ersten Komponente (1) angeordnet ist;
wobei die Positioniervorrichtung (3) konfiguriert ist um zu ermöglichen, dass die zweite Komponente (2) an die erste Komponente (1) angenähert derart positioniert wird, dass die zweite Anschlagfläche (B2) der ersten Anschlagfläche (B1) gegenüberliegt, und wobei die Spann- und Blockiervorrichtung (4) dafür ausgelegt ist, die Positioniervorrichtung (3) aufzunehmen, und aktivierbar ist, um die Positioniervorrichtung (3) festzuspannen und zu blockieren, so dass die zweite Komponente (2) derart gegen die erste Komponente (1) blockiert wird, dass die zweite Anschlagfläche (B2) gegen die erste Anschlagfläche (B1) anschlägt und angedrückt wird,
wobei die Positioniervorrichtung (3) ein Einführungsglied (31) umfasst, das von der zweiten Anschlagfläche (B2) hervorstehend angeordnet ist, und zwei Kupplungselemente (32) umfasst, die in Querrichtung und beidseitig von dem Einführungsglied (31) hervorstehen;
wobei die Spann- und Blockiervorrichtung (4) ein Spann- und Blockierelement (41) umfasst, das in einem Sitz (5) angeordnet ist, der in der ersten Komponente (1) verwirklicht und der ersten Anschlagfläche (B1) zugewandt ist, wobei das Spann- und Blockierelement (41) derart in dem Sitz (5) angeordnet ist, dass es in einer Rotationsbewegung im Sitz (5) um eine Drehachse drehbar ist, die orthogonal zu der ersten Anschlagfläche (B1) ist, wobei das Spann- und Blockierelement (41) einen Kopfabschnitt (42) umfasst, der so beschaffen ist, dass er ein Axialgehäuse (43), ein Quergehäuse (44), um das Axialgehäuse (43) von außen zugänglich zu machen, und, beiderseits des Quergehäuses (44) und mit dem Quergehäuse (44) in Verbindung stehend, zwei ringförmige Aussparungen (45) umfasst, die jeweils zumindest eine profilierte Gleitfläche (C) umfassen, die eine derart profilierte Gestalt aufweist, dass, ausgehend von einem Einlassabschnitt der ringförmigen Aussparungen (45), die mit dem Quergehäuse (44) in Verbindung stehen, ein erster Teilabschnitt (C1) der Gleitfläche (C) im Wesentlichen parallel zu dem Quergehäuse (44) und zu der ersten Anschlagfläche (B1) ist, ein zweiter Teilabschnitt (C2) der Gleitfläche (C), der auf den ersten Teilabschnitt (C1) nachfolgt, zu der Innenseite des Axialgehäuses (43) hin geneigt ist und von der ersten Anschlagfläche (B1) wegführt, und ein dritter Teilabschnitt (C3) der Gleitfläche (C), der auf den zweiten Teilabschnitt (C2) nachfolgt, derart gestaltet ist, dass er einen Hohlraum (CA) bildet, der, in Bezug auf die erste Anschlagfläche (B1), in einem größeren Abstand angeordnet ist als der erste Teilabschnitt (C1) der Gleitfläche (C);
wobei das Axialgehäuse (43) so bemessen ist, dass es in seinem Inneren das Einführungsglied (31) der Positioniervorrichtung (3) aufnehmen kann, das Quergehäuse (44) so bemessen ist, dass es in seinem Inneren die zwei Kupplungselemente (32) der Positioniervorrichtung (3) aufnehmen und sie an dem Einlassabschnitt der zwei ringförmigen Aussparungen (45) anordnen kann, wobei die zwei ringförmigen Aussparungen (45) so bemessen sind, dass sie jeweils die zwei Kupplungselemente (32) aufnehmen können, durch wechselseitiges Gleiten zwischen der Gleitfläche (C) mit profilierter Gestalt und den zwei Kupplungselementen (32);
wobei das Spann- und Blockierelement (41) in dem Sitz (5) derart drehbar ist, dass es in einer ersten Kupplungsstellung (P1) positionierbar ist, in der das Quergehäuse (44) in einer ersten Richtung relativ zu der ersten Anschlagfläche (B1) angeordnet ist, um es zu ermöglichen, wenn die zweite Komponente (2) der ersten Komponente (1) angenähert und somit die zweite Anschlagfläche (B2) der ersten Anschlagfläche (B1) zugewandt und gegenüberliegend angeordnet wird, dass das Positionierungsglied (31) in das Axialgehäuse (43) eintreten und die zwei Kupplungselemente (32) in das Quergehäuse (44) eintreten und dem Einlassabschnitt der zwei ringförmigen Aussparungen (45) zugewandt werden können,
wobei das Spann- und Blockierelement (41) somit in einer Rotationsbewegung im Sitz (5) relativ zu dem Positionierungsglied (31) und zu den zwei Kupplungselementen (32) um die Drehachse in einer ersten Drehrichtung (V1) bis zu einer zweiten Blockierstellung (P2) drehbar ist, so dass die zwei ringförmigen Aussparungen (45) in ihrem Inneren die zwei Kupplungselemente (32) aufnehmen, so dass die Gleitfläche (C) mit der profilierten Gestalt gegen die zwei Kupplungselemente (32) gleitet, bis die zwei Kupplungselemente (32) in dem Hohlraum (CA) des dritten Teilabschnitts (C3) der Gleitfläche (C) aufgenommen sind und somit die zweite Komponente (2) gegen die erste Komponente (1) blockiert wird, wobei das Gleiten des zweiten geneigten Teilabschnitts (C2) der Gleitfläche (C) gegen die zwei Kupplungselemente (32) eine Klemmkraft zwischen der zweiten Anschlagfläche (B2) und der ersten Anschlagfläche (B1) erzeugt und durch diese Klemmkraft die zweite Komponente (2) gegen die erste Komponente (1) gezogen wird und die zweite Anschlagfläche (B2) auf Anschlag und gegen die erste Anschlagfläche (B1) anliegend gehalten wird.

2. Schnellkupplungseinheit (100) nach Anspruch 1, wobei die Spann- und Blockiervorrichtung (4) derart konfiguriert ist, dass das Spann- und Blockierelement (41) in dem Sitz (5) so angeordnet ist, dass es sich axial relativ zu dem Sitz (5) bewegen kann, und wobei die Spann- und Blockiervorrichtung (4) vorspannende Federmittel (6) umfasst, die derart angeordnet und konfiguriert sind, dass sie auf das Spann- und Blockierelement (41) eine Federkraft ausüben, um das Spann- und Blockierelement (41) in einer ersten inneren Stellung relativ zu der ersten Anschlagfläche (B1) der ersten Komponente (1) zu halten, und wobei die Federmittel (6) konfiguriert sind, um es dem Spann- und Blockierelement (41) zu ermöglichen, während es sich in dem Sitz (5) aus der ersten Kupplungsstellung (P1) in die zweite Blockierstellung (P2) dreht, sich axial relativ zu dem Sitz (5) in Richtung einer zweiten äußeren Stellung relativ zu der ersten Anschlagfläche (B1) zu bewegen, während der zweite geneigte Teilabschnitt (C2) der Gleitfläche (C) gegen die zwei Kupplungselemente (32) gleitet und somit das Überwinden des zweiten geneigten Teilabschnitts (C2) und die Positionierung der zwei Kupplungselemente (32) in dem Hohlraum (CA) des dritten Teilabschnitts (C3) der Gleitfläche (C) erleichtert, wobei die Federmittel (6), wenn die Kupplungselemente (32) in dem Hohlraum (CA) positioniert sind, dafür angeordnet sind, mit ihrer Federkraft eine Rückzugskraft zum Rückholen des Spann- und Blockierelements (41) in die erste innere Stellung auszuüben, indem die Hohlräume (CA) des dritten Teilabschnitts (C3) der Gleitfläche (C) gegen die Kupplungselemente (32) geklemmt werden, und somit die zweite Komponente (2) an die erste Komponente (1).

3. Schnellkupplungseinheit (100) nach Anspruch 2, wobei die Spann- und Blockiervorrichtung (4) ein Rotationselement (47) umfasst, das an einen Betätigungshebel (48) gekoppelt ist und das innen hohl ist, um ein inneres Gehäuse (470) zu definieren, und das drehbar in eine Drehaufnahme (51) eingeführt ist, die in der ersten Komponente (1) angefertigt ist, wobei das Spann- und Blockierelement (41) derart gestaltet ist, dass es auch einen schaftförmigen Abschnitt (46) umfasst, der einteilig mit dem Kopfabschnitt (42) ausgeführt ist, wobei das Spann- und Blockierelement (41) derart angeordnet ist, dass der schaftförmige Abschnitt (46), mittels einer Drehschutz-Kupplung, in dem inneren Gehäuse (470) des Rotationselements (47) positioniert ist, so dass, wenn das Rotationselement (47) mit Hilfe des Betätigungshebels (48) in eine Drehbewegung relativ zu der Drehaufnahme (51) versetzt wird, der schaftförmige Abschnitt (46), und somit der Kopfabschnitt (42) des Spann- und Blockierelements (41), in Drehbewegung versetzt wird, und wobei der schaftförmige Abschnitt (46) des Spann- und Blockierelements (41) so in dem inneren Gehäuse (470) des Rotationselements (47) gekoppelt ist, dass es eine Translationsbewegung in axialer Richtung ausführen kann, und wobei die vorspannenden Federmittel (6) so angeordnet sind, dass sie zwischen dem schaftförmigen Abschnitt (46) des Spann- und Blockierelements (41) und einer Anschlagfläche (63) der ersten Komponente (1) wirken, um den Kopfabschnitt (42) des Spann- und Blockierelements (41) in der ersten inneren Stellung in dem Sitz (5) in Anschlag gegen eine Anschlagwand (471) des Rotationselements (47) zu halten.

4. Schnellkupplungseinheit (100) nach Anspruch 3, wobei die Federmittel (6) Tellerfedern umfassen.

5. Schnellkupplungseinheit (100) nach einem der vorhergehenden Ansprüche 3 und 4, wobei der schaftförmige Abschnitt (46) so in das innere Gehäuse (470) des Rotationselements (47) eingeführt und darin gekoppelt ist, dass er eine Translationsbewegung in axialer Richtung mittels einer Passfederverbindung (49) ausführen kann, bei der eine Passfeder (49) zwischen einem Schlitz (490), der axial entlang eines Teils des schaftförmigen Abschnitts (46) verwirklicht ist, und einer Aushöhlung (491), die in einem gegenüberliegenden Teil der Wand des inneren Gehäuses (470) verwirklicht ist, eingefügt ist.

6. Schnellkupplungseinheit (100) nach einem der vorhergehenden Ansprüche, wobei die Spann- und Blockiervorrichtung (4) Drehbegrenzungsmittel (8) zur Begrenzung der Winkeldrehung des Rotationselements (47) und somit des Spann- und Blockierelements (41) umfasst, so dass zwei Endstellungen für die Winkeldrehung des Rotationselements (47), und somit des Spann- und Blockierelements (41) festgelegt werden, die der ersten Kupplungsstellung (P1) und der zweiten Blockierstellung (P2) entsprechen, wobei die Drehbegrenzungsmittel (8) zur Begrenzung der Winkeldrehung ein Paar halbkugelförmiger Aufnahmen (81, 82) umfasst, die winkelig auf einer unteren Wand des Rotationselements (47) angeordnet sind, und eine Kugel (83), die von einem Stift (84) getragen wird, der in einer entsprechenden Nische der ersten Komponente (1) eingesetzt und der Drehaufnahme (51) zugewandt ist, wobei die Kugel (83) auf dem Stift (84) mit einer dazwischen eingelegten Feder montiert ist, so dass, wenn das Rotationselement (47) in Drehbewegung versetzt wird und eine der zwei halbkugelförmigen Aufnahmen (81, 82) in die Stellung des Stiftes (84) gebracht wird, die Kugel (83) von der Feder in eine halbkugelförmige Aufnahme (81, 82) gedrückt wird, um eine Endanschlagstellung für die Drehung des Rotationselements (47), und somit des Spann- und Blockierelements (41) zu verwirklichen.

7. Schnellkupplungseinheit (100) nach einem der vorhergehenden Ansprüche, Zentriermittel (7) umfassend, die dafür ausgelegt sind, das Zentrieren, und somit das korrekte Einführen, des Einführungsglieds (31) und der zwei Kupplungselemente (32) der Positioniervorrichtung (3) relativ zu dem Axialgehäuse (43) beziehungsweise dem Quergehäuse (44) zu ermöglichen die in dem Spann- und Blockierelement (41) vorhanden sind, wenn die zweite Komponente (2) der ersten Komponente (1) angenähert ist und die zweite Anschlagfläche (B2) der ersten Anschlagfläche (B 1) zugewandt angeordnet ist.

8. Schnellkupplungseinheit (100) nach Anspruch 7, wobei die Zentriermittel (7) zumindest ein kegelförmiges Element (71) umfassen, das orthogonal zu und hervorstehend von der zweiten Anschlagfläche (B2) der zweiten Komponente (2) angeordnet ist, und zumindest eine entsprechende kegelförmige Aufnahme (72), die in der ersten Komponente (1) angefertigt ist und mit der ersten Anschlagfläche (B1) in Verbindung steht, wobei die Abmessungen und die Form der kegelförmigen Aufnahme (72) komplementär zu denen des kegelförmigen Elements (71) sind.

9. Schnellkupplungseinheit (100) nach Anspruch 8, wobei das zumindest eine kegelförmige Element (71) eine ringförmige Rille (73) aufweist und wobei die Zentriermittel (7) einen Blockierstift (74) umfassen, der, unter Zwischenfügen eines elastischen Elements, in einer entsprechenden quergerichteten Aufnahme (75) angeordnet ist, die in der ersten Komponente (1) angefertigt ist und mit der kegelförmigen Aufnahme (72) in Verbindung steht, so dass, wenn das kegelförmige Element (71) in die kegelförmige Aufnahme (72) eingesetzt und eingeführt wird, der Blockierstift (74) in die ringförmige Rille (73) eintreten und das kegelförmige Element (71) in der kegelförmigen Aufnahme (72) blockieren kann, und somit die zweite Komponente (2) der ersten Komponente (1) angenähert halten kann, wobei die zweite Anschlagfläche (B2) der ersten Anschlagfläche (B 1) zugewandt ist.

## Revendications

1. Une unité de raccord rapide (100) comprenant :
un premier composant (1) comprenant une première surface de butée (B1) ;
un deuxième composant (2) comprenant une deuxième surface de butée (B2) et configuré pour s'accoupler avec au moins un élément de butée (R) conformé pour venir buter contre un article ou une série d'articles ;
un système de raccord rapide (S) pour l'accrochage rapide du deuxième composant (2) au premier composant (1), où le système de raccord rapide (S) comprend :
un dispositif de positionnement (3), disposé sur le deuxième composant (2) ;
un dispositif de serrage et de blocage (4), disposé sur le premier composant (1) ;
le dispositif de positionnement (3) étant configuré pour permettre de positionner le deuxième composant (2) rapproché du premier composant (1) avec la deuxième surface de butée (B2) opposée à la première surface de butée (B1) et le dispositif de serrage et de blocage (4) étant configuré de manière à recevoir le dispositif de positionnement (3) et pouvant être activé pour serrer et
bloquer le dispositif de positionnement (3) afin de bloquer le deuxième composant (2) au premier composant (1) avec la deuxième surface de butée (B2) en butée et forcée contre la première surface de butée (B1) ;
dans laquelle le dispositif de positionnement (3) comprend un organe d'insertion (31) disposé en saillie à partir de la deuxième surface de butée (B2) et deux éléments d'accouplement (32) se projetant transversalement et bilatéralement à partir de l'organe d'insertion (31) ;
dans laquelle le dispositif de serrage et de blocage (4) comprend un élément de serrage et de blocage (41) disposé dans un siège (5) réalisé dans le premier composant (1) et faisant face à la première surface de butée (B1), l'élément de serrage et de blocage (41) étant disposé dans le siège (5) de manière à pouvoir tourner en rotation dans le siège (5) selon un axe de rotation perpendiculaire à la première surface de butée (B1), l'élément de serrage et de blocage (41) comprenant une portion de tête (42) conformée de manière à comprendre un logement axial (43), un logement transversal (44), pour rendre le logement axial (43) accessible de l'extérieur, et, bilatéralement au logement transversal (44) et communiquant avec le logement transversal (44), deux renfoncements annulaires (45) dont chacun comprend au moins une surface profilée de coulissement (C) qui a une forme profilée de manière à ce que, à partir d'une portion d'entrée des renfoncements annulaires (45) communiquant avec le logement transversal (44), un premier tronçon (C1) de la surface de coulissement (C) soit essentiellement parallèle au logement transversal (44) et à la première surface de butée (B1), un deuxième tronçon (C2) de la surface de coulissement (C), consécutif au premier tronçon (C1), soit incliné vers l'intérieur du logement axial (43), en s'éloignant de la première surface de butée (B1), et un troisième tronçon (C3) de la surface de coulissement (C), consécutif au deuxième tronçon (C2), soit conformé de manière à définir une cavité (CA) qui est située, par rapport à la première surface de butée (B1), à une plus grande distance que le premier tronçon (C1) de la surface de coulissement (C) ;
dans laquelle le logement axial (43) est dimensionné de manière à pouvoir recevoir intérieurement l'organe d'insertion (31) du dispositif de positionnement (3), le logement transversal (44) est dimensionné de manière à pouvoir recevoir intérieurement les deux éléments d'accouplement (32) du dispositif de positionnement (3) en les positionnant au niveau de la portion d'entrée des deux renfoncements annulaires (45), les deux renfoncements annulaires (45) étant dimensionnés de manière à pouvoir loger respectivement les deux éléments d'accouplement (32) par coulissement réciproque entre la surface de coulissement (C) de forme profilée et les deux éléments d'accouplement (32) ;
dans laquelle l'élément de serrage et de blocage (41) peut être tourné dans le siège (5) de manière à pouvoir être positionné dans une première position d'accouplement (P1), dans laquelle le logement transversal (44) est disposé dans une première direction par rapport à la première surface de butée (B1) afin de permettre, lorsque le deuxième composant (2) est rapproché du premier composant (1), en positionnant la deuxième surface de butée (B2) en face de et opposée à la première surface de butée (B1), que l'organe de positionnement (31) soit inséré dans le logement axial (43) et que les deux éléments d'accouplement (32) soient insérés dans le logement transversal (44) et soient en face de la portion d'entrée des deux renfoncements annulaires (45) ;
dans laquelle l'élément de serrage et de blocage (41) peut ainsi tourner en rotation dans le siège (5) par rapport à l'organe de positionnement (31) et aux deux éléments d'accouplement (32) autour de l'axe de rotation dans un premier sens de rotation (V1) jusqu'à une deuxième position de blocage (P2) de manière à ce que les deux renfoncements annulaires (45) logent intérieurement les deux éléments d'accouplement (32) en faisant coulisser la surface de coulissement (C), par le biais de la forme profilée, contre les deux éléments d'accouplement (32) jusqu'à ce que les deux éléments d'accouplement (32) soient logés dans la cavité (CA) du troisième tronçon (C3) de la surface de coulissement (C) bloquant ainsi le deuxième composant (2) au premier composant (1), avec le coulissement du deuxième tronçon incliné (C2) de la surface de coulissement (C) contre les deux éléments d'accouplement (32) qui génère une force de serrage entre la deuxième surface de butée (B2) et la première surface de butée (B1), avec ladite force de serrage le deuxième composant (2) est tiré contre le premier composant (1) et la deuxième surface de butée (B2) est maintenue en butée et contre la première surface de butée (B1).

2. L'unité de raccord rapide (100) selon la revendication 1, dans laquelle le dispositif de serrage et de blocage (4) est configuré de manière à ce que l'élément de serrage et de blocage (41) soit disposé dans le siège (5) de manière à pouvoir translater axialement par rapport au siège (5), et dans laquelle le dispositif de serrage et de blocage (4) comprend des moyens élastiques de pré-charge (6) qui sont disposés et configurés de manière à exercer, sur l'élément de serrage et de blocage (41), une force élastique de nature à maintenir l'élément de serrage et de blocage (41) dans une première position intérieure par rapport à la première surface de butée (B1) du premier composant (1), et dans laquelle les moyens élastiques (6) sont configurés pour permettre à l'élément de serrage et de blocage (41) de pouvoir translater axialement par rapport au siège (5), pendant sa rotation dans le siège (5) de la première position d'accouplement (P1) à la deuxième position de blocage (P2), vers une deuxième position extérieure par rapport à la première surface de butée (B1) lors du coulissement du deuxième tronçon incliné (C2) de la surface de coulissement (C) contre les deux éléments d'accouplement (32), facilitant ainsi le passage au-delà du deuxième tronçon incliné (C2) et le positionnement des deux éléments d'accouplement (32) dans la cavité (CA) du troisième tronçon (C3) de la surface de coulissement (C), avec les moyens élastiques (6), lorsque les éléments d'accouplement (32) sont positionnés dans la cavité (CA), qui sont disposés pour exercer, avec leur force élastique, une force de rappel de l'élément de serrage et de blocage (41) vers la première position intérieure, serrant ainsi les cavités (CA) du troisième tronçon (C3) de la surface de coulissement (C) contre les éléments d'accouplement (32), et donc le deuxième composant (2) au premier composant (1).

3. L'unité de raccord rapide (100) selon la revendication 2, dans laquelle le dispositif de serrage et de blocage (4) comprend un élément de rotation (47), accouplé avec un levier d'actionnement (48), qui est intérieurement creux pour définir un logement intérieur (470) et qui est inséré de façon rotative dans un siège de rotation (51), réalisé dans le premier composant (1), dans laquelle l'élément de serrage et de blocage (41) est conformé de manière à comprendre également une portion en forme d'arbre (46) en corps unique avec la portion de tête (42), l'élément de serrage et de blocage (41) étant disposé de manière à ce que la portion en forme d'arbre (46) soit positionnée, par le biais d'un accouplement anti-rotationnel, dans le logement intérieur (470) de l'élément de rotation (47), de sorte que, lorsque l'élément de rotation (47), par le biais du levier d'actionnement (48), est actionné en rotation par rapport au siège de rotation (51), la portion en forme d'arbre (46), et donc la portion de tête (42) de l'élément de serrage et de blocage (41), est actionnée en rotation, et dans laquelle la portion en forme d'arbre (46) de l'élément de serrage et de blocage (41) est accouplée dans le logement intérieur (470) de l'élément de rotation (47) avec liberté de translater axialement, et dans laquelle les moyens élastiques (6) de pré-charge sont disposés de manière à agir entre la portion en forme d'arbre (46) de l'élément de serrage et de blocage (41) et une surface de butée (63) du premier composant (1) de manière à maintenir la portion de tête (42) de l'élément de serrage et de blocage (41) dans la première position intérieure dans le siège (5) en butée contre une paroi de butée (471) de l'élément de rotation (47).

4. L'unité de raccord rapide (100) selon la revendication 3, dans laquelle les moyens élastiques (6) comprennent des ressorts Belleville.

5. L'unité de raccord rapide (100) selon l'une quelconque des revendications précédentes 3 et 4, dans laquelle la portion en forme d'arbre (46) est insérée et accouplée dans le logement intérieur (470) de l'élément de rotation (47) avec liberté de translater axialement par le biais d'un accouplement à clavette (49), où une clavette (49) est interposée entre une fente (490) réalisée axialement le long d'une partie de la portion en forme d'arbre (46) et un creux (491) réalisé dans une partie opposée de la paroi du logement intérieur (470).

6. L'unité de raccord rapide (100) selon l'une quelconque des revendications précédentes, dans laquelle le dispositif de serrage et de blocage (4) comprend des moyens limiteurs (8) de la rotation angulaire de l'élément de rotation (47), et donc de l'élément de serrage et de blocage (41), de manière à identifier deux positions limites pour la rotation angulaire de l'élément de rotation (47), et donc de l'élément de serrage et de blocage (41), correspondant à la première position d'accouplement (P1) et à la deuxième position de blocage (P2), dans laquelle les moyens limiteurs (8) de la rotation angulaire comprennent une paire de sièges hémisphériques (81, 82) angulairement disposés sur une paroi inférieure de l'élément de rotation (47) et une sphère (83) portée par une goupille (84) insérée dans une niche correspondante du premier composant (1) faisant face au siège de rotation (51), avec la sphère (83) qui est montée sur la goupille (84) par interposition d'un ressort de sorte que, lorsque l'élément de rotation (47) est actionné en rotation et que l'un des deux sièges hémisphériques (81, 82) est amené au niveau de la position de la goupille (84), la sphère (83) est poussée par le ressort dans un siège hémisphérique (81, 82) en réalisant une position de fin de course pour la rotation de l'élément de rotation (47), et donc de l'élément de serrage et de blocage (41).

7. L'unité de raccord rapide (100) selon l'une quelconque des revendications précédentes, comprenant des moyens de centrage (7) configurés pour permettre le centrage, et donc la bonne insertion, de l'organe d'insertion (31) et des deux éléments d'accouplement (32) du dispositif de positionnement (3) avec, respectivement, le logement axial (43) et le logement transversal (44) présents dans l'élément de serrage et de blocage (41) lorsque le deuxième composant (2) est rapproché du premier composant (1) et la deuxième surface de butée (B2) est disposée en face de la première surface de butée (B1) .

8. L'unité de raccord rapide (100) selon la revendication 7, dans laquelle les moyens de centrage (7) comprennent au moins un élément conique (71) disposé perpendiculairement sur et se projetant à partir de la deuxième surface de butée (B2) du deuxième composant (2) et au moins un siège conique (72) correspondant réalisé dans le premier composant (1) et communiquant avec la première surface de butée (B1), le siège conique (72) ayant des dimensions et une forme complémentaires à l'élément conique (71).

9. L'unité de raccord rapide (100) selon la revendication 8, dans laquelle ledit au moins un élément conique (71) a une rainure annulaire (73) et dans laquelle les moyens de centrage (7) comprennent une goupille de blocage (74) disposée, avec interposition d'un élément élastique, dans un siège transversal (75) correspondant réalisé dans le premier composant (1) et communiquant avec le siège conique (72), de sorte que, lorsque l'élément conique (71) est inséré et introduit dans le siège conique (72), la goupille de blocage (74) peut s'insérer dans la rainure annulaire (73) et bloquer l'élément conique (71) dans le siège conique (72), et donc maintenir le deuxième composant (2) rapproché du premier composant (1), avec la deuxième surface de butée (B2) faisant face à la première surface de butée (B1).
